# Europäisches Patentamt

## European Patent Office

## Office européen des brevets

(19)

(11) Veröffentlichungsnummer: **0 105 212**
**B1**

(12) **EUROPÄISCHE PATENTSCHRIFT**

(45) Veröffentlichungstag der Patentschrift:
29.06.88

(21) Anmeldenummer: 83108733.3

(22) Anmeldetag: 05.09.83

(51) Int. Cl.⁴: **H 04 Q 11/04,** H 04 M 11/06,
H 04 L 11/20

(54) Schaltungsanordnung zum Übertragen von Signalen zwischen Teilnehmeranschlussleitungen und wenigstens einer Übertragungsleitung einer dienstintegrierten Fernmeldeanlage.

(30) Priorität: 07.09.82 DE 3233221

(43) Veröffentlichungstag der Anmeldung:
11.04.84 Patentblatt 84/15

(45) Bekanntmachung des Hinweises auf die Patenterteilung:
29.06.88 Patentblatt 88/26

(84) Benannte Vertragsstaaten:
AT CH DE FR GB LI NL SE

(56) Entgegenhaltungen:
INTERNATIONAL SWITCHING SYMPOSIUM, 21.-
25. September 1981, Band 3, "Paper" 32A2, Seiten
1-7, Montreal, CA; S. DAL MONTE u.a.: "Proteo
system - UT 10/3: A combined local and toll
exchange"
INTERNATIONAL SWITCHING SYMPOSIUM, 7.-11.
Mai 1979, "Paper" 22A3, Seiten 419-426, Paris, FR; R.
SCHELLER u.a.: "A local PCM switching system for
voice and data"
INTERNATIONAL SWITCHING SYMPOSIUM, 25.-
29. Oktober 1976, "Paper" 413-4, Seiten 1-8, Kyoto,
JP; L. KATZSCHNER u.a.: "Problems of signalling
in integrated PCM-switching networks for data
and telephone"
INTERNATIONAL SWITCHING SYMPOSIUM, 21.-
25. September 1981, Band 4, "Paper" 42B6, Seiten
1-8, Montreal, CA; R. MONTEMURRO u.a.:
"Customer access to the ISDN facilities"

(73) Patentinhaber: **Siemens Aktiengesellschaft Berlin
und München, Wittelsbacherplatz 2, D-8000
München 2 (DE)**

(72) Erfinder: **Lechner, Robert, Dipl.- Ing.,
Haidtfeldstrasse 5, D-8156 Otterfing (DE)**
Erfinder: **Küffer, Peter, Dipl.- Ing., Noestrasse 28,
D-8000 München 71 (DE)**
Erfinder: **Arends, Dieter, Dipl.- Ing., Am
Fuchsbogen 8, D-8060 Fürstenfeldbruck (DE)**
Erfinder: **Rogler, Erich, Drygalski Allee 118, D-8000
München 71 (DE)**

## Beschreibung

Die Erfindung bezieht sich auf eine Schaltungsanordnung zum Übertragen von Signalen zwischen Teilnehmeranschlußleitungen und wenigstens einer mit einer Vermittlungseinrichtung verbundenen Übertragungsleitung einer dienstintegrierten Fernmeldeanlage, in welcher Steuer- und/oder Datensignale auf den Teilnehmeranschlußleitungen mit einer ersten, relativ niedrigen Übertragungsrate und auf der jeweiligen Übertragungsleitung in Zeitfächern von Zeitkanälen mit zyklisch wiederholt in aufeinanderfolgenden Pulsrahmen auftretenden Zeitfächern auftreten, die Signale mit einer zweiten, gegenüber der ersten Übertragungsrate höheren Übertragungsrate zu übertragen gestatten, und in welcher die Teilnehmeranschlußleitungen mit der jeweiligen Übertragungsleitung über einen Konzentrator verbunden sind, der einerseits die diesem über die einzelnen Teilnehmeranschlußleitungen zugeführten Signale in den für ihre Weiterleitung zur Verfügung stehenden Zeitkanälen über die jeweilige Übertragungsleitung abgibt und der andererseits die diesem in für die Weiterleitung zur Verfügung stehenden Zeitkanälen auf der jeweiligen Übertragungsleitung zugeführten Signale an die jeweils in Frage kommende Teilnehmeranschlußleitung weiterleitet.

Es ist bereits bekannt, in dienstintegrierten Fernmeldenetzen zur Übertragung von Sprach- und/oder Datensignalen auf Teilnehmeranschlußleitungen einen oder mehrere 64-kbit/s Übertragungskanäle zu benutzen. Zusätzlich ist jeweils ein weiterer 16-kbit/s-Übertragungskanal für die Übertragung von Signalisierungssignalen und von Datensignalen für sogenannte Out-slot-Dienste vorgesehen (Zeitschrift "Telcom Report", 1980, Heft 3, Seiten 223 bis 227). Außerdem ist es bereits bekannt, für die Übertragung von Signalisierungssignalen zwischen Vermittlungsstellen in digitalen Nachrichtennetzen einen gesonderten Zeitkanal von den für die Übertragung von Signalen zur Verfügung stehenden Zeitkanälen zu benutzen (Zeitschrift "Telcom Report", 1979, Heft 6, Seiten 394 bis 401).

Darüber hinaus ist bereits eine Schaltungsanordnung der eingangs genannten Art bekannt (International Switching Symposium, Montreal, CA, 21.-25. September, 1981, Band 3, "Paper" 32A2, Seiten 1-7, "Proteo system - UT 10/3: A combined local and toll exchange"). Ein bei dieser bekannten Schaltungsanordnung vorgesehener Konzentrator soll auch für den Anschluß von ISDN-Teilnehmerleitungen erweiterbar sein. Die auf derartigen Teilnehmerleitungen in einem 16-kbit/s-Übertragungskanal auftretenden Steuersignale und Datensignale sollen dabei nach einem statistischen Multiplexprinzip über mit dem Konzentrator verbundene Übertragungsleitungen übertragbar sein. Dieses statistische Multiplexprinzip ist jedoch nicht näher ausgeführt.

Der Erfindung liegt nun die Aufgabe zugrunde, einen Weg zu zeigen, wie mit einer relativ niedrigen Übetragungsrate auftretende Steuer- und/oder Datensignale zwischen Teilnehmeranschlußleitungen und wenigsens einer mit einer Vermittlungseinrichtung verbundenen Übertragungsleitung einer dienstintegrierten Fernmeldeanlage übertragen werden können, ohne die Übertragungskapazität der Fernmeldeanlage und der Übertragungsleitung wesentlich zu verringern.

Gelöst wird die vorstehend aufgezeigte Aufgabe bei einer Schaltungsanordnung der eingangs genannten Art erfindungsgemäß dadurch, daß auf der jeweiligen Übertragungsleitung für die Übertragung von Steuersignalen und von Datensignalen in jeder Übertragungsrichtung lediglich jeweils ein Zeitkanal der für die Signalübertragung vorhandenen Zeitkanäle zur Verfügung steht.

Die Erfindung bringt den Vorteil mit sich, daß für die Übertragung sämtlicher mit einer relativ niedrigen Übertragungsrate auftretender Steuer- und/oder Datensignale von bzw. zu der Vermittlungsstelle hin lediglich jeweils ein Zeitkanal der insgesamt für die Übertragung von Signalen zur Verfügung stehenden Zeitkanälen benötigt wird, so daß die übrigen Zeitkanäle ausschließlich für die Übertragung von Signalen mit einer hohen Übertragungsrate zwischen miteinander in Verbindung stehenden Teilnehmerendeinrichtungen verwendet werden können.

Zweckmäßigerweise weist der Konzentrator wenigstens einen Leitungsmodul, an dem die Teilnehmeranschlußleitungen angeschlossen sind und der mit den Teilnehmeranschlußleitungen nacheinander für eine Signalaufnahme bzw. Signalabgabe wirksam verbunden ist, und eine zentrale Steuereinrichtung auf, die sowohl mit dem jeweiligen Leitungsmodul als auch mit der jeweiligen Übertragungsleitung verbunden ist, wobei die zentrale Steuereinrichtung die über die einzelnen Teilnehmeranschlußleitungen abgegebenen, ihr über den Leitungsmodul zugeführten Signale in den für ihre Weiterleitung zur Verfügung stehenden Zeitkanälen an die jeweils in Frage kommende Übertragungsleitung abgibt und in entsprechenden Zeitkanälen über die jeweilige Übertragungsleitung zugeführte Signale an den Leitungsmodul für die Weiterleitung an die in Frage kommenden Teilnehmeranschlußleitungen abgibt. Die Verwendung einer zentralen Steuereinrichtung für die Übertragung von Signalen von bzw. zu der Vermittlungsstelle hin bringt den Vorteil eines geringen Steuerungsaufwandes in dem zugehörigen Leitungsmodul mit sich. Dadurch ist es insbesondere möglich, den Konzentrator in einfacher Weise im Bedarfsfalle durch Anfügen weiterer Leitungsmoduln modular zu erweitern.

Zweckmäßigerweise erfolgen die Signalübertragungen auf den Teilnehmeranschlußleitungen, auf der jeweiligen Übertragungsleitung sowie zwischen dem Leitungsmodul und der zentralen Steuereinrichtung jeweils als gesicherte Signalübertragungen. Damit ist eine gesicherte Signalübertragung zwischen Teilnehmerendeinrichtungen und einer zugehörigen Vermittlungsstelle sichergestellt.

Vorzugsweise weist jeder Leitungsmodul eine Mehrzahl von Leitungsanschlußschaltungen auf, an denen die Teilnehmeranschlußleitungen angeschlossen sind und die als Schnittstellenschaltungen dienen, wobei mit den zu dem jeweiligen Leitungsmodul gehörenden Leitungsanschlußschaltungen eine gemeinsame Bewertungsschaltung für die genannte Überprüfung der Sicherungssignale verbunden ist. Dies bringt den Vorteil eines geringen schaltungstechnischen Aufwandes für die Überprüfung der Sicherungssignale mit sich.

Zweckmäßigerweise weist die zentrale Steuereinrichtung wenigstens einen mit dem jeweiligen Leitungsmodul verbundenen ersten Schaltungsteil und wenigstens einen mit diesem ersten Schaltungsteil und der jeweiligen Übertragungsleitung verbundenen zweiten Schaltungsteil auf, wobei der jeweilige erste Schaltungsteil einerseits Steuersignale und Datensignale von dem jeweiligen Leitungsmodul aufnimmt, die Datensignale selbst und die Steuersignale über den zweiten Schaltungsteil an die Übertragungsleitung abgibt und andererseits Datensignale selbst und Steuersignale über den zweiten Schaltungsteil von der Übertragungsleitung her aufnimmt sowie Daten- und Steuersignale an den jeweiligen Leitungsmodul abgibt. Da der erste Schaltungsteil hinsichtlich der Steuerung der Weiterleitung von Steuersignalen entlastet ist, ist sichergestellt, daß die Datensignale von diesem ersten Schaltungsteil ohne wesentliche Verzögerung weitergeleitet werden können.

Die zentrale Steuereinrichtung kann auch in der Weise aufgebaut sein, daß sie wenigstens einen ersten und wenigstens einen zweiten, mit dem jeweiligen Leitungsmodul und der jeweiligen Übertragungsleitung verbundenen Schaltungsteil aufweist, daß der jeweilige erste Schaltungsteil einerseits Datensignale von dem jeweiligen Leitungsmodul aufnimmt und an die Übertragungsleitung abgibt und andererseits Datensignale von der Übertragungsleitung her aufnimmt und diese auf ein Freigabesignal von dem zweiten Schaltungsteil hin an den jeweiligen Leitungsmodul abgibt und daß der jeweilige zweite Schaltungsteil einerseits Steuersignale von dem jeweiligen Leitungsmodul aufnimmt und an die Übertragungsleitung abgibt und andererseits Steuersignale von der Übertragungsleitung her aufnimmt und diese an den jeweiligen Leitungsmodul abgibt. Da jeder der Schaltungsteile lediglich nur eine bestimmte Art von Signalen weiterzuschalten braucht, wird die dynamische Belastung beider Schaltungsteile reduziert.

Anhand einer Zeichnung wird die Erfindung nachstehend beispielsweise näher erläutert.

Die Zeichnung zeigt einen Konzentrator K, der einerseits durch Teilnehmeranschlußleitungen Ltg1 bis Ltgn mit Teilnehmerendeinrichtungen Tln1 bis Tlnn verbunden ist. Andererseits ist dieser Konzentrator K durch PCM-Leitungsanordnungen PCM1 bis PCM4 an eine digitale Vermittlungsstelle eines dienstintegrierten digitalen Fernmeldenetzes (ISDN) angeschlossen. Bei den Teilnehmerendeinrichtungen Tln1 bis Tlnn handelt es sich um digitale Endeinrichtungen, die gleichzeitig in unterschiedlichen Kommunikationsarten arbeiten können. So kann beispielsweise gleichzeitig mit einer Sprachübertragung eine Text- bzw. Datenübertragung über die Teilnehmeranschlußleitugen erfolgen. Für diese Übertragungen stehen zwei Kanäle zur Verfügung, in denen jeweils digitale Signale mit einer Übertragungsgeschwindigkeit von 64 kbit/s übertragen werden können. Diese Kanäle werden auch als B- oder Basiskanäle bezeichnet. Zusätzlich zu diesen Basiskanälen ist noch ein gesonderter Kanal vorgesehen, in dem wahlweise dem Verbindungsaufbau bzw. -abbau dienende Signalisierungsinformationen oder Sonderdatensignalen übertragen werden können. Bei den Sonderdatensignalen kann es sich beispielsweise um Datensignale handeln, die relativ selten zur Übertragung anstehen. In dem gerade genannten gesonderten Kanal der auch als D-Kanal bezeichnet wird, erfolgt die Übertragung mit einer Übertragungsgeschwindigkeit von 16 kbit/s. Die Signalübertragung in den Basiskanälen und in dem D-Kanal erfolgt übrigens in Form einer gesicherten Übertragungsprozedur gemäß CCITT-Empfehlung X.25.

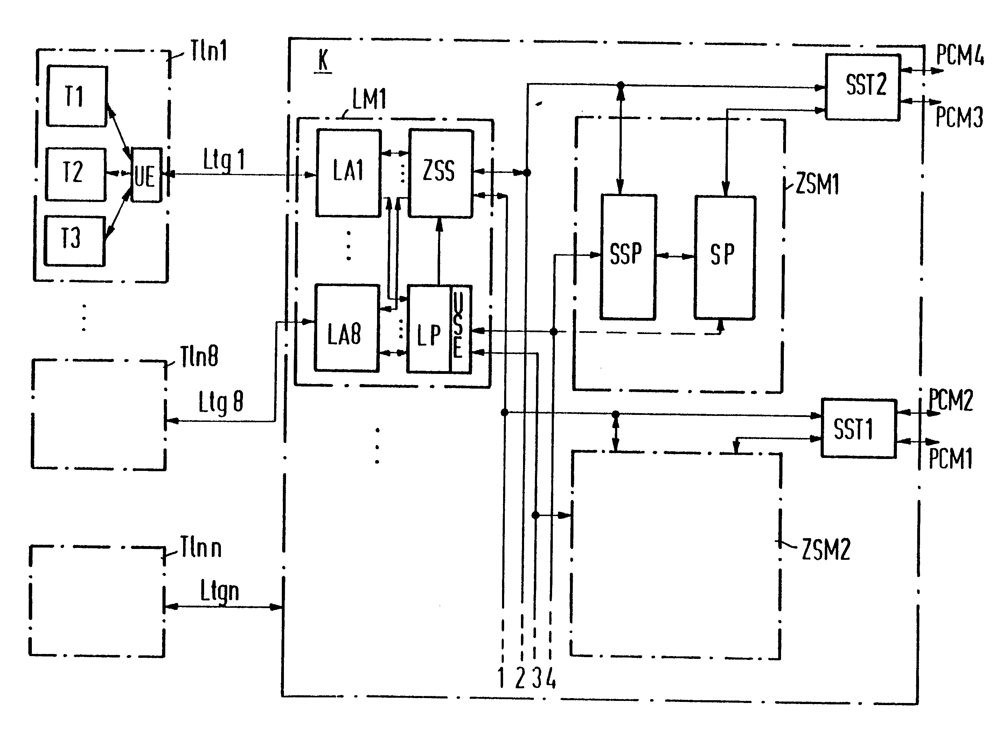

Zum Betrieb in den zuvor genannten unterschiedlichen Kommunikationsarten weisen die einzelnen Teilnehmerendeinrichtungen entsprechende Endgeräte auf. In Fig. 1 sind für die Teilnehmerendeinrichtung Tln1 drei Endgeräte T1 bis T3 dargestellt. Dabei möge beispielsweise die Sprachübertragung und die Übertragung von Signalisierungsinformationen mit Hilfe des Endgerätes T1, die Text- bzw. Datenübertragung mit Hilfe des Endgerätes T2 und die Übertragung von Sonderdatensignalen mit Hilfe des Endgerätes T3 erfolgen. Diese Endgeräte sind an eine Übertragungseinrichtung UE angeschlossen, die die Signalübertragung von bzw. zu den Endgeräten steuert. Die übrigen an dem Konzentrator K angeschlossenen Teilnehmerendeinrichtungen können in gleicher Weise aufgebaut sein.

Bei dem vorliegenden Ausführungsbeispiel sind jeweils acht Teilnehmerendeinrichtungen durch Teilnehmeranschlußleitungen mit einem Leitungsmodul des Konzentrators K verbunden. In Fig. 1 ist lediglich einer dieser Leitungsmoduln dargestellt. Der mit LM1 bezeichnete Leitungsmodul enthält für jede der acht Teilnehmeranschlußleitungen Ltg1 bis Ltg8 eine gesonderte Leitungsanschlußschaltung LA1 bis LA8. Jede dieser Leitungsanschlußschaltungen ist einerseits mit einer Zeitfachsteuerung ZSS und andererseits mit einem Leitungsprozessor LP verbunden.

Die Zeitfachsteuerung ZSS, die durch den Leitungsprozessor LP gesteuert wird, ist an zwei interne PCM-Leitungsanordnungen 1 und 2 für Zweirichtungsbetrieb angeschlossen. Diese internen PCM-Leitungsanordnungen dienen, wie im folgenden noch näher erläutert werden wird, innerhalb des Konzentrators K zur Übertragung der Basiskanalsignale. Die Übertragung dieser Basiskanalsignale erfolgt dabei auf diesen Leitungen mit einer Übertragungsgeschwindigkeit von 4,096 Mbit/s. An jede dieser PCM-Leitungsanordnungen 1 und 2 ist außerdem eine Schnittstellenschaltung SST1 bzw. SST2 angeschlossen. Diese Schnittstellenschaltungen SST1 bzw. SST2 sind jeweils durch zwei PCM-Leitungsanordnungen PCM1, PCM2 bzw. PCM3, PCM4 für Zweirichtungsbetrieb mit einer digitalen Vermittlungsstelle eines dienstintegrierten digitalen Fernmeldenetzes (ISDN) verbunden. Über diese PCM-Leitungsanordnungen erfolgt jeweils eine Signalübertragung mit einer Übertragungsgeschwindigkeit von 2,048 Mbit/s.

Der bereits erwähnte Leitungsprozessor LP ist über eine Umschalteinrichtung USE an zwei gesonderte Busleitungsanordnungen 3 und 4 für Zweirichtungsbetrieb angeschlossen. Über diese Busleitungsanordnungen erfolgt, wie im folgenden noch näher erläutert werden wird, innerhalb des Konzentrators K die Übertragung der D-Kanalsignale. An diese Busleitungsanordnungen ist jeweils ein zentraler Steuermodul ZSM1 bzw. ZSM2 angeschlossen. Jeder dieser zentralen Steuermodul enthält, wie in der Zeichnung für den zentralen Steuermodul ZSM1 dargestellt, einen Sonderdaten-Steuerungsprozessor SSP und einen Signalisierungs-Prozessor SP. Der Sonderdaten-Steuerungsprozessor SSP des zentralen Steuermoduls ZSM1 ist an die Busleitungsanordnung 4 und an die interne PCM-Leitungsanordnung 2 angeschlossen. Außerdem ist dieser Sonderdaten-Steuerungsprozessor mit dem zugehörigen Signalisierungs-Prozessors SP verbunden, der außerdem mit der Schnittstellenschaltung SST2 verbunden ist. In entsprechender Weise steht der zentrale Steuermodul ZSM2 über seinen Sonderdaten-Steuerungsprozessor und über seinen Signalisierungs-Prozessor mit der Busleitungsanordnung 3, mit der internen PCM-Leitungsanordnung 1 und mit der Schnittstellenschaltung SST1 in Verbindung.

Nachdem zuvor der Aufbau des in der Zeichnung dargestellten Konzentrators erläutert worden ist, wird nunmehr auf die Arbeitsweise dieses Konzentrators eingegangen Hierzu wird zunächst der Fall betrachtet, daß von einer der Teilnehmerendeinrichtungen Tln1 bis Tlnn eine Verbindung zu einer weiteren Teilnehmerendeinrichtung des dienstintegrierten digitalen Fernmeldenetzes aufzubauen ist. Bei der Teilnehmerendeinrichtung, von der aus eine Verbindung aufzubauen ist, möge es sich beispielsweise um die Teilnehmerendeinrichtung Tln1 handeln. Wie bereits oben erwähnt, werden die dem Signalisierungsaufbau bzw. -abbau dienenden Signalisierungssignale in einem Sonderkanal (D-Kanal) über die Teilnehmeranschlußleitung Ltg1 zu dem Konzentrator K hin übertragen. Die Übertragung der einzelnen Signalisierungssignale erfolgt dabei nach einer gesicherten Übertragungsprozedur (HDLC-Prozedur) in Form von Datenpaketen.

Zur Einleitung des Verbindungsaufbaues wird nun zunächst von der Teilnehmerendeinrichtung Tln1 eine Belegungsmeldung über die Teilnehmeranschlußleitung Ltg1 zu dem Konzentrator K hin übertragen. Diese in dem D-Kanal übertragene Belegungsmeldung wird in die Leitungsanschlußschaltung LA1 des Leitungsmoduls LM1 übernommen und an den Leitungsprozessor LP weitergeleitet. Dieser Leitungsprozessor LP sammelt die zu dem die Belegungsmeldung darstellenden Datenpaket gehörenden Signalteile auf und führt zunächst eine Überprüfung der der Datensicherung dienenden Signalteile durch. Die die eigentliche Belegungsmeldung darstellenden Signalteile werden bei einem fehlerfreien Empfang des Datenpaketes für die weitere Bearbeitung durch einen der zentralen Steuermodul ZSM1, ZSM2 in einem Sendepuffer zwischengespeichert. Diesen Signalteilen werden dabei noch zusätzliche Signalteile angefügt, die diejenige Leitungsanschlußschaltung LA1 bis LA8 bezeichnen, über welche zuvor die Belegungsmeldung aufgenommen worden ist. Bei dem hier betrachteten Fall handelt es sich dabei um die Leitungsanschlußschaltung LA1. Außerdem wird ein Kennungssignal angefügt, welches die weiterzuleitenden Signalteile als Signalisierungsinformationen, wie es hier der Fall ist, oder als Sonderdatensignale kennzeichnet.

Sämtliche Leitungsmoduln (LM1...) des Konzentrators K werden von den beiden zentralen Steuermoduln ZSM1 und ZSM2 in gesonderten Abfragezyklen auf das Vorhandensein weiterzuleitender Signale abgefragt. Solche weiterzuleitenden Signale liegen bei dem hier zunächst betrachteten Fall in dem Leitungsmodul LM1 in Form einer Belegungsmeldung vor. Zur Abfrage der einzelnen Leitungsmoduln werden von jedem der zentralen Steuermoduln nacheinander die Leitungsmoduln bezeichnende Adressen zusammen mit der eigentlichen Abfrage dienenden Abfragesignalen abgegeben. Die jeweiligen Adressen und Abfragesignale stellen dabei einen hinsichtlich der Übertragung gesicherten Datenblock dar. Die Übertragung dieser Datenblöcke erfolgt zu dem Steuermodul ZSM1 hin über die Busleitungsanordnung 4, und zu dem Sender an dem Steuermodul ZSM2 hin über die Busleitungsanordnung 3. Dabei werden von dem zentralen Steuermodul ZSM1 nacheinander Datenblöcke mit steigenden Adressen und von dem zentralen Steuermodul ZSM2 Datenblöcke mit abnehmenden Adressen übertragen. Die Adressen werden hier mit gleichen Folgeraten abgegeben.

Jeder der Leitungsmoduln (LM1,...) kann wechselweise über eine der Busleitungsanordnungen einen an ihn adressierten Datenblock aufnehmen. Die dazu erforderliche wechselweise Anschaltung an die Busleitungsanordnungen erfolgt durch die bereits oben erwähnte Umschalteinrichung USE des jeweiligen Leitungsmoduls. Gesteuert werden die Umschalteinrichtungen jeweils durch den zugehörigen Leitungsprozessor LP. Bei dem hier erläuterten Ausführungsbeispiel enthalten die Umschalteinrichtungen jeweils von dem zugehörigen Leitungsprozessor her steuerbare Bustreiber (Tristate-Bustreiber).

Auf die Aufnahme eines der Abfrage dienenden Datenblockes über eine der Busleitungsanordnungen hin gibt der durch diesen Datenblock adressierte Leitungsmodul ein Quittungssignal wiederum in Form eines hinsichtlich der Übertragung gesicherten Datenblockes an den zugehörigen zentralen Steuermodul ab. In diesen Datenblock werden die gegebenenfalls in dem betreffenden Leitungsmodul zwischengespeicherten, weiterzuleitenden Signale eingefügt. Nach Abgabe eines solchen Quittungssignals (Datenblock) werden die Bustreiber des betreffenden Leitungsmoduls derart gesteuert, daß die nächste Abfrage nunmehr über die andere Busleitungsanordnung erfolgen kann. Im übrigen wird in jedem der Leitungsmoduln durch den zugehörigen Leitungsprozessor LP nach der Anschaltung an eine der Busleitungsanordnungen eine Zeitüberwachung durchgeführt. Bleibt während der Überwachungszeitspanne eine Ansteuerung über die betreffende Busleitungsanordnung aus, so wird der betreffende Leitungsmodul an die jeweils andere Busleitungsanordnung angeschaltet. Auf diese Weise kann bei Ausfall einer der Busleitungsanordnungen oder bei Ausfall einer der zentralen Steuermodulen die Abfrage der einzelnen Leitungsmoduln durch den jeweils anderen zentralen Steuermodul erfolgen.

Erst nach der Übernahme eines Quittungssignals durch den zugehörigen zentralen Steuermodul wird von diesem ein weiterer Leitungsmodul zur Abfrage angesteuert. Bleibt nach der Ansteuerung einer der Leitungsmoduln ein solches Quittungssignal aus, so wird nach einer festgelegten Zeitspanne ein weiterer Leitungsmodul angesteuert. Dies tritt immer dann ein, wenn der gerade angesteuerte Leitungsmodul zu diesem Zeitpunkt mit der anderen Busleitungsanordnung verbunden ist.

Die gerade erläuterten Abfragevorgänge werden in den zentralen Steuermodulen ZSM1 und ZSM2 jeweils durch den zugehörigen Sonderdaten-Steuerungsprozessor SSP gesteuert.

Für die Erläuterung der Weiterleitung der gerade in dem Sendepuffer des Leitungsmoduls LM1 zwischengespeicherten Belegungsmeldung sei nun angenommen, daß die Umschalteinrichtung USE des Leitungsmoduls LM1 derart gesteuert ist, daß die nächste Abfrage über die Busleitungsanordnung 4 und damit durch den Sonderdaten-Steuerungsprozessor SSP des zentralen Steuermoduls ZSM1 erfolgen kann. Nach der Ansteuerung des Leitungsmoduls LM1 durch ein entsprechendes Abfragesignal übergibt der zugehörige Leitungsprozessor LP mit dem Quittungssignal die in dem Sendepuffer zwischengespeicherte Belegungsmeldung an den Sonderdaten-Steuerungsprozessor SSP des zentralen Steuermoduls ZSM1. Danach wird, wie gerade erwähnt, durch den Leitungsprozessor LP die zugehörige Umschalteinrichtung USE umgesteuert. Damit können dann gegebenenfalls weitere in dem Leitungsmoduls LM1 zwischengespeicherte Signale, die ursprünglich von anderen Teilnehmerendeinrichtungen abgegeben worden sind, durch den zentralen Steuermodul ZSM2 übernommen werden.

Der Sonderdaten-Steuerungsprozessor SSP des zentralen Steuermoduls ZSM1 führt nun zunächst nach Empfang des Quittungssignals eine Überprüfung der der Datensicherung dienenden Signalteile durch. Bei einer fehlerfreien Übertragung werden die die Belegungsmeldung darstellenden Signalteile anschließend an den Signalisierungs-Prozessor SP weitergeleitet. Diesen Signalteilen werden dabei noch Signalteile angefügt, die den Leitungsmodul bezeichnen, von dem das gerade aufgenommene Quittungssignal abgegeben worden ist. Im vorliegenden Fall handelt es sich dabei um den Leitungsmodul LM1. Der Signalisierungs-Prozessor SP überprüft zunächst, ob für eine Sprach- und/oder eine Datenübertragung auf der internen PCM-Leitungsanordnung 2 freie Zeitfächer von Zeitkanälen mit zyklisch wiederholt in aufeinanderfolgenden Pulsrahmen auftretenden Zeitfächern zur Verfügung stehen. Ist dies der Fall, so wird die gerade vorliegende Belegungsmeldung der Schnittstellenschaltung SST2 zugeführt, die dann diese Belegungsmeldung in einem fest vorgegebenen Zeitkanal der PCM-Leitungsanordnung PCM3, PCM4 zu der zugehörigen Vermittlungsstelle hin überträgt. Bei diesem festen Zeitkanal handelt es sich um den üblicherweise bei der PCM-Übertragung vorgesehenen Signalisierungskanal. Vor der Übertragung der Belegungsmeldung in diesem Signalisierungskanal wird diese von dem Signalisierungs-Prozessor SP entsprechend dem Zeichengabesystem CCITT Nr. 7 aufbereitet. Diese Aufbereitung erfolgt auch für sämtliche Signalisierungssignale, die einer Belegungsmeldung nachfolgen.

Stellt der Signalisierungs-Prozessor SP dagegen bei Vorliegen einer Belegungsmeldung fest, daß für die anschliessende Signalübertragung auf der internen PCM Leitungsanordnung 2 keine freien Zeitfächer zur Verfügung stehen, so wird diese Belegungsmeldung zusammen mit einem Abfragesignal an denjenigen Leitungsmodul zurückgesendet, von dem diese Belegungsmeldung ursprünglich ausgegangen ist. Dies ist im vorliegenden Fall der Leitungsmodul LM1. Diese Belegungsmeldung wird dann in der bereits oben dargestellten Weise dem zentralen Steuermodul ZSM2 zugeführt und von diesem bei Vorliegen freier Zeitfächer auf der internen PCM-Leitungsanordnung 1 an die zugehörige Vermittlungsstelle weitergeleitet.

Für die weitere Betrachtung sei angenommen, daß die Belegungsmeldung durch den zentralen Steuermodul ZSM1 an die zugehörige Vermittlungsstelle weitergeleitet worden ist. Die Vermittlungsstelle gibt aufgrund dieser Belegungsmeldung eine Freimeldung ab, die wiederum in dem bereits erwähnten Signalisierungskanal der PCM-Leitungsanordnungen PCM3, PCM4 zu dem Konzentrator K hin übertragen wird. Diese Freimeldung ist dabei entsprechend dem Zeichengabesystem CCITT Nr. 7 aufbereitet. Sie enthält unter anderem Angaben bezüglich des für eine Signalübertragung auf der internen PCM-Leitungsanordnung 2 zu benutzenden Zeitfaches Außerdem sind dieser Freimeldung wiederum Signalteile angefügt, die die Teilnehmerendeinrichtung bezeichnen, von der ursprünglich die Belegungsmeldung ausgegangen ist. Diese gerade genannten Signalteile werden der zuvor empfangenen Belegungsmeldung entnommen.

Die gerade erwähnte Freimeldung wird in die Schnittstellenschaltung SST2 übernommen und von dieser anschließend an den Signalisierungs-Prozessor SP des zentralen Steuermoduls ZSM1 weitergeleitet. Dieser Signalisierungs-Prozessor übergibt dann diese Freimeldung an den zugehörigen Sonderdaten-Steuerungsprozessor SSP, der dieser Freimeldung zunächst die zur Adressierung des in Frage kommenden Leitungsmoduls dienenden Signalteile entnimmt und anschließend die verbleibenden Signalteile entsprechend der ermittelten Adresse in einem der Abfrage dienenden Datenblock (Abfragesignal) dem in Frage kommenden Leitungsmodul zuführt. Bei dem hier betrachteten Fall handelt es sich um den Leitungsmodul LM1.

Diese gerade genannten, die Freimeldung darstellenden Signalteile werden von dem Leitungsprozessor LP des Leitungsmoduls LM1 in einen Empfangspuffer übernommen. Bei der anschließenden Weiterverarbeitung dieser Freimeldung werden dieser die Angaben bezüglich des für die Signalübertragung auf der internen PCM-Leitungsanordnung 2 zu benutzenden Zeitfaches und die Adresse der Leitungsanschlußschaltung, an die die Freimeldung weiterzuleiten ist, entnommen. Der Leitungsprozessor LP übergibt anschließend diese Informationen an die bereits erwähnte Zeitfachsteuerung ZSS, die diese Informationen für die Signalübertragung nach dem Verbindungsaufbau zwischenspeichert. Nach der Übergabe dieser Informationen an die Zeitfachsteuerung ZSS leitet schließlich der Leitungsprozessor LP die die eigentliche Freimeldung darstellenden Signalteile an die in Frage kommende Leitungsanschlußschaltung, hier die Leitungsanschlußschaltung LA1, weiter. Von dieser Leitungsanschlußschaltung LA1 aus wird dann diese Freimeldung in Form eines Datenpaketes in dem bereits oben erwähnten D-Kanal zu der Teilnehmerendeinrichtung Tln1 hin übertragen.

Auf das Eintreffen der Freimeldung hin gibt die Teilnehmerendeinrichtung Tln1 weitere, dem Verbindungsaufbau dienende Signalisierungsinformation, wie z. B. Wählzeichen ab, die wie die zuvor abgegebene Belegungsmeldung in Form von Datenpaketen gemäß der CCITT-Empfehlung X.25 in dem gesonderten D-Kanal über die Teilnehmeranschlußleitung Ltg1 zu dem Konzentrator K hin übertragen werden. Die Weiterleitung dieser Signalisierungsinformationen innerhalb des Konzentrators K erfolgt dann in der zuvor erläuterten Weise, mit dem einzigen Unterschied, daß diese Signalisierungsinformationen ausschließlich dem zentralen Steuermodul ZSM1 zugeführt werden, dem zuvor auch die Belegungsmeldung zugeführt worden ist. Für den allgemeinen Fall gilt, daß eine Belegungsmeldung an denjenigen zentralen Steuermodul abgegeben wird, der gerade den in Frage kommenden Leitungsmodul im Zuge eines Abfragezyklus ansteuert, und daß die dieser Belegungsmeldung nachfolgenden Signalisierungsinformationen dann ausschließlich dem betreffenden zentralen Steuermodul zugeführt werden. Hierfür werden im Zuge der Verarbeitung der Freimeldung in dem betreffenden Leitungsmodul entsprechende Steuerinformationen hinterlegt. In entsprechender Weise werden auch innerhalb des Konzentrators K Signalisierungsinformationen bearbeitet, mit denen für einen weiteren Basiskanal ein Zeitfach auf einer der internen PCM-Leitungsanordnungen des Konzentrators K belegt werden soll oder die einem Verbindungsabbau dienen.

Auf die Übertragung der nach einem Verbindungsaufbau zwischen den an einer Verbindung beteiligten Teilnehmerendeinrichtung auszutauschenden Signale wird hier nicht näher eingegangen. Es sei hier lediglich angemerkt, daß die in einem oder mehreren Basiskanälen von bzw. zu einer an dem Konzentrator K angeschlossenen Teilnehmerendeinrichtung zu übertragenden Signale innerhalb des Konzentrators K ohne Einbeziehung der zentralen Steuermoduln ZSM1, ZSM2 über die Leitungsanschlußschaltung und die Zeitfachsteuerung des jeweils zugehörigen Leitungsmoduls erfolgt. Wie bereits erwähnt, werden hierfür in der betreffenden Zeitfachsteuerung im Zuge des Verbindungsaufbaues Angaben bezüglich des oder der für die Übertragung zu benutzenden Zeitfächer hinterlegt.

Es wird nun noch der Fall betrachtet, daß in dem bereits erwähnten D-Kanal Sonderdatensignale zu übertragen sind. Bei diesen Sonderdatensignalen handelt es sich um Datensignale, die zwar mit einer relativ hohen Übertragungsgeschwindigkeit von 16 kbit/s zu übertragen sind, aber relativ selten zur Übertragung anstehen, wie beispielsweise Telemetriedaten bzw. Bildschirmtext oder Datensignale, für die kein Basiskanal belegt werden soll. Die Weiterleitung dieser Datensignale innerhalb des Konzentrators K erfolgt bis zu dem Sonderdaten-Steuerungsprozessor SSP eines der zentralen Steuermoduln ZSM1 , ZSM2 hin in der bereits dargestellten Weise über die Busleitungsanordnung 3 bzw. 4. Der betreffende Sonderdaten-Steuerungsprozessor SSP gibt diese Datensignale dann direkt an die ihm zugeordnete interne PCM-Leitungsanordnung 1 bzw. 2 des Konzentrators K ab, über die diese Datensignale in einem vorgegebenen Zeitkanal zu der zugehörigen Schnittstellensteuerung SST1 bzw. SST2 hin übertragen werden. Die betreffende Schnittstellensteuerung leitet dann diese in dem vorgegebenen Zeitkanal übertragenen Datensignale über die in Frage kommende PCM-Leitungsanordnung an die zugehörige Vermittlungsstelle weiter. Dieser vorgegebene Zeitkanal dient zur Übertragung von Sonderdatensignalen sämtlicher an dem Konzentrator K angeschlossenen Teilnehmerendeinrichtungen. Die Übertragung der von den einzelnen Teilnehmerendeinrichtungen abgegebenen Sonderdatensignale erfolgt dabei innerhalb dieses vorgegebenen Zeitkanals in virtuellen Kanälen gemäß der CCITT-Empfehlung X.25, und zwar in Form von Datenpaketen. Die Weiterleitung der Sonderdatensignale innerhalb des Konzentrators K erfolgt, im Gegensatz zur Weiterleitung der Signalisierungsinformationen, nicht ausschließlich über stets ein und denselben zentralen Steuermodul. In die Weiterleitung sind hier beide zentrale Steuermoduln fallweise einbezogen. Die demzufolge über verschiedene PCM-Leitungsanordnungen (PCM1 bis PCM4) in Form von Datenpaketen übertragenen Sonderdatensignale werden in der zugehörigen Vermittlungsstelle oder in einer dieser nachfolgenden Paketvermittlungsstelle hinsichtlich ihrer Reihenfolge sortiert.

Zu den an dem Konzentrator K angeschlossenen Teilnehmerendeinrichtungen hin zu übertragende Sonderdatensignale werden ebenfalls in dem vorgegebenen Zeitkanal auf einer der internen PCM-Leitungsanordnungen 1 oder 2 des Konzentrators K übertragen und dem jeweils zugehörigen Sonderdaten-Steuerungsprozessor SSP damit direkt zugeführt. Dieser Sonderdaten-Steuerungsprozessor leitet dann diese Sonderdatensignale in der bereits oben dargestellten Weise an die in Frage kommende Teilnehmerendeinrichtung über die Busleitungsanordnungen 3 oder 4 weiter.

Die Steuerung der Abfrage der einzelnen Leitungsmoduln durch die zentralen Steuermoduln ZSM1 und ZSM2 kann, abweichend von der gerade erläuterten Arbeitsweise, auch in der Weise erfolgen, daß die der Abfrage dienenden Abfragesignale von den den zentralen Steuermoduln zugehörigen Signalisierungs-Prozessoren SP abgegeben werden. Diese Signalisierungs-Prozessoren sind dazu jeweils mit der zugehörigen Busleitungsanordnung 3 bzw. 4 zu verbinden. In der Zeichnung ist dies durch die unterbrochene Verbindungslinie zwischen der Busleitungsanordnung 4 und dem Signalisierungs-Prozessor SP des zentralen Steuermoduls ZSM1 angedeutet. Nach der Abgabe von Abfragesignalen durch einen der Signalisierungs-Prozessoren nimmt der betreffende Signalisierungs-Prozessor lediglich solche Quittungssignale auf, welche Signalisierungsinformationen enthalten oder welchen keine weiterzuleitende Signalteile hinzugefügt sind. Nachrichtensignale (Quittungssignale) als Antwort auf ein Abfragesignal des Signalisierungs-Prozessors SP, die weiterzuleitende Sonderdatensignale enthalten, werden ausschließlich von dem zugehörigen Sonderdaten-Steuerungsprozessor SSP aufgenommen. Die Weiterleitung der von dem jeweiligen Signalisierungs-Prozessor oder von dem zugehörigen Sonderdaten-Steuerungsprozessor fallweise aufgenommenen Signale erfolgt dann in der bereits oben dargestellten Weise.

Die in einem der Signalisierungskanäle der PCM-Leitungsanordnungen PCM3, PCM4 bzw. PCM1, PCM2 übertragenen und dem jeweils zugehörigen Signalisierungs-Prozessor SP zugeführte Signalisierungsinformationen werden von diesem selbst mit einem entsprechenden Abfragesignal an den in Frage kommenden Leitungsmodul weitergeleitet. Dem zugehörigen Sonderdaten-Steuerungsprozessor SSP von einer Paketvermittlungseinrichtung der zugehörigen Vermittlungsstelle bzw. der Paketvermittlungsstelle her in einem vorgegebenen Zeitkanal zugeführte Sonderdatensignale werden von diesem erst dann zu den in Frage kommenden Leitungsmodul übertragen, wenn dieser Sonderdaten-Steuerungsprozessor von dem zugehörigen Signalisierungs-Prozessor ein entsprechendes Freigabesignal zugeführt bekommt.

Abschließend sei hier noch angemerkt, daß für die erwähnten Leitungsprozessoren LP, die Sonderdaten-Steuerungsprozessoren SSP und die Signalisierungs-Prozessoren SP bei diesem Ausführungsbeispiel Mikrocomputer verwendet werden.

**Patentansprüche**

1. Schaltungsanordnung zum Übertragen von Signalen zwischen Teilnehmeranschlußleitungen (Ltg1 bis Ltgn) und wenigstens einer mit einer Vermittlungseinrichtung verbundenen Übertragungsleitung (z. B. PCM3) einer dienstintegrierten Fernmeldeanlage, in welcher Steuer- und/oder Datensignale auf den Teilnehmeranschlußleitungen mit einer ersten, relativ niedrigen Übertragungsrate und auf der jeweiligen Übertragungsleitung in Zeitfächern von Zeitkanälen mit zyklisch wiederholt in aufeinanderfolgenden Pulsrahmen auftretenden Zeitfächern auftreten, die Signale mit einer zweiten, gegenüber der ersten Übertragungsrate höheren Übertragungsrate zu übertragen gestatten, und in welcher die Teilnehmeranschlußleitungen (Ltg1 bis Ltgn) mit der jeweiligen Übertragungsleitung (z. B. PCM3) über einen Konzentrator (K) verbunden sind, der einerseits die diesem über die einzelnen Teilnehmeranschlußleitungen (Ltg1 bis Ltgn) zugeführten Signale in den für ihre Weiterleitung zur Verfügung stehenden Zeitkanälen über die jeweilige Übertragungsleitung abgibt und der andererseits die diesem in für die Weiterleitung zur Verfügung stehenden Zeitkanälen auf der jeweiligen Übertragungsleitung (z. B. PCM3) zugeführten Signale an die jeweils in Frage kommende Teilnehmeranschlußleitung (z. B. Ltg1) weiterleitet, dadurch gekennzeichnet, daß auf der jeweiligen Übertragungsleitung (z. B. PCM3) für die Übertragung von Steuersignalen und von Datensignalen in jeder Übertragungsrichtung lediglich jeweils ein Zeitkanal der für die Signalübertragung vorhandenen Zeitkanäle zur Verfügung steht.

2. Schaltungsanordnung nach Anspruch 1, dadurch gekennzeichnet, daß der Konzentrator (K) wenigstens einen Leitungsmodul (LM1), an dem die Teilnehmeranschlußleitungen (Ltg1 bis Ltg8) angeschlossen sind und der mit den Teilnehmeranschlußleitungen nacheinander für eine Signalaufnahme bzw. Signalabgabe wirksam verbunden ist, und eine zentrale Steuereinrichtung (z. B. ZSM1) aufweist, die sowohl mit dem jeweiligen Leitungsmodul (LM1) als auch mit der jeweiligen Übertragungsleitung (z. B. PCM3) verbunden ist, und daß die zentrale Steuereinrichtung (ZSM1) die über die einzelnen Teilnehmeranschlußleitungen abgegebenen, ihr über den Leitungsmodul zugeführten Signale in den für ihre Weiterleitung zur Verfügung stehenden Zeitkanälen an die jeweils in Frage kommende Übertragungsleitung (z. B. PCM3) abgibt und in entsprechenden Zeitkanälen über die jeweilige Übertragungsleitung zugeführte Signale an den Leitungsmodul für die Weiterleitung an die in Frage kommenden Teilnehmeranschlußleitungen abgibt.

3. Schaltungsanordnung nach Anspruch 2, dadurch gekennzeichnet, daß die Signalübertragungen auf den Teilnehmeranschlußleitungen (Ltg1 bis Ltgn), auf der jeweiligen Übertragungsleitung (z. B. PCM3) sowie zwischen dem Leitungsmodul (LM1) und der zentralen Steuereinrichtung (ZSM1) jeweils als gesicherte Signalübertragungen erfolgen.

4. Schaltungsanordnung nach Anspruch 3, dadurch gekennzeichnet, daß jeder Leitungsmodul (LM1) eine Mehrzahl von Leitungsanschlußschaltungen (LA1 bis LA8) aufweist, an denen die Teilnehmeranschlußleitungen (Ltg1 bis Ltg8) angeschlossen sind und die als Schnittstellenschaltungen dienen, und daß mit den zu dem jeweiligen Leitungsmodul gehörenden Leitungsanschlußschaltungen eine gemeinsame Bewertungsschaltung (LP) für die genannte Überprüfung der Sicherungssignale verbunden ist.

5. Schaltungsanordnung nach einem der Ansprüche 2 bis 5, dadurch gekennzeichnet, daß die zentrale Steuereinrichtung (ZSM1) wenigstens einen mit dem jeweiligen Leitungsmodul (LM1) verbundenen ersten Schaltungsteil (SSP) und wenigstens einen mit diesem ersten Schaltungsteil und der jeweiligen Übertragungsleitung (z. B. PCM3) verbundenen zweiten Schaltungsteil (SP) aufweist, und daß der jeweilige erste Schaltungsteil (SSP) einerseits Steuersignale und Datensignale von dem jeweiligen Leitungsmodul (LM1) aufnimmt, die Datensignale selbst und die Steuersignale über den zweiten Schaltungsteil (SP) an die Übertragungsleitung (z. B. PCM3) abgibt und andererseits Datensignale selbst und Steuersignale über den zweiten Schaltungsteil (SP) von der Übertragungsleitung (PCM3) her aufnimmt sowie Daten- und Steuersignale an den jeweiligen Leitungsmodul (LM1) abgibt.

6. Schaltungsanordnung nach einem der Ansprüche 2 bis 5, dadurch gekennzeichnet, daß die zentrale Steuereinrichtung (ZSM1) wenigstens einen ersten und wenigstens einen zweiten, mit dem jeweiligen Leitungsmodul (LM1) und der jeweiligen Übertragungsleitung (z. B. PCM3) verbundenen Schaltungsteil aufweist, daß der jeweilige erste Schaltungsteil (SSP) einerseits Datensignale von dem jeweiligen Leitungsmodul (LM1) aufnimmt und an die Übertragungsleitung (PCM3) abgibt und andererseits Datensignale von der Übertragungsleitung her aufnimmt und diese auf ein Freigabesignal von dem zweiten Schaltungsteil (SP) hin an den jeweiligen Leitungsmodul abgibt, und daß der jeweilige zweite Schaltungsteil (SP) einerseits Steuersignale von dem jeweiligen Leitungsmodul (LM1) aufnimmt und an die Übertragungsleitung (PCM3) abgibt und andererseits Steuersignale von der Übertragungsleitung her aufnimmt und diese an den jeweiligen Leitungsmodul abgibt.

## Claims

1. A circuit arrangement for the transmission of signals between subscriber lines (Ltg1 to Ltgn) and at least one transmission line (e.g. PCM3), which is connected to a switching device, of a service-integrated telecommunications system, in which control- and/or data signals occur on the subscriber lines at a first, relatively low transmission rate, and occur on the respective transmission line in time slots of time channels which comprise time slots which occur in cyclic repetition in consecutive pulse frames and which permit the transmission of signals at a second transmission rate which is higher than the first transmission rate, and in which the subscriber lines (Ltg1 to Ltgn) are connected to the respective transmission line (e.g. PCM3) via a concentrator (K) which on the one hand emits the signals, with which it is supplied via the individual subscriber lines (Ltg1 to Ltgn), via the respective transmission line in time channels available for the transmission of said signals, and which on the other hand forwards the signals with which it is supplied on the respective transmission line (e.g. PCM3) in time channels available for the transmission of said signals to the respective subscriber line (e.g. Ltg1), characterised in that on the respective transmission line (e.g. PCM3) only one respective time channel of the time channels provided for the signal transmission is available for the transmission of control signals and data signals in each transmission direction.

2. A circuit arrangement as claimed in claim 1, characterised in that the concentrator (K) comprises at least one line module (LM1), to which the subscriber lines (Ltg1 to Ltg8) are connected and which is actively connected to the subscriber lines consecutively for signal reception and signal emission, and comprises a central control device (e.g. ZSM1) which is connected both to the respective line module (LM1) and to the respective transmission line (e.g. PCM3), and that the central control device (ZSM1) outputs the signals which are emitted via the individual subscriber lines and with which it is supplied via the line module, to the respective transmission line (e.g. PCM3) in time channels available for the transmission of said signals, and emits signals supplied via the respective transmission line in corresponding time channels to the line module for transmission to the respective subscriber lines.

3. A circuit arrangement as claimed in claim 2, characterised in that the signal transmissions on the subscriber lines (Ltg1 to Ltgn), on the respective transmission line (e.g. PCM3) and between the line module (LM1) and the central control device (ZSM1) in each case take place as safeguarded signal transmissions.

4. A circuit arrangement as claimed in claim 3, characterised in that each line module (LM1) comprises a plurality of line circuits (LA1 to LA8) to which the subscriber lines (Ltg1 to Ltg8) are connected and which serve as interface circuits, and that the line circuits assigned to the respective line module are connected to a common evaluating circuit (LP) for the aforementioned checking of the safeguarding signals.

5. A circuit arrangement as claimed in one of the claims 2 to 5, characterised in that the central control device (ZSM1) comprises at least one first circuit component (SSP), which is connected to the respective line module (LM1), and at least one second circuit component (SP), which is connected to this first circuit component and to the respective transmission line (e.g. PCM3), and that the respective first circuit component (SSP) on the one hand receives control signals and data signals from the respective line module (LM1) and emits the data signals itself and the control signals via the second circuit component (SP) to the transmission line (e.g. PCM3), and on the other hand receives data signals itself and control signals via the second circuit component (SP) from the transmission line (PCM3) and emits data- and control signals to the respective line module (LM1).

6. A circuit arrangement as claimed in one of the claims 2 to 5, characterised in that the central control device (ZSM1) comprises at least one first and at least one second circuit component which are connected to the respective line module (LM1) and to the respective transmission line (e.g. PCM3), that the respective first circuit component (SSP) on the one hand receives data signals from the respective line module (LM1) and emits said data signals to the transmission line (PCM3), and on the other hand receives data signals from the transmission line and emits said data signals to the respective line module in response to a release signal from the second circuit component (SP), and that the respective second circuit component (SP) on the one hand receives control signals from the respective line module (LM1) and emits these to the transmission line (PCM3) and on the other hand receives control signals from the transmission line and emits these to the respective line module.

## Revendications

1. Montage pour transmettre des signaux entre des lignes d'abonnés (Ltg1 à Ltgn) et au moins une ligne de transmission (par exemple PCM3), reliée à un dispositif de commutation, d'une installation de télécommunication à services intégrés, dans lequel des signaux de commande et/ou des signaux de données apparaissent dans les lignes d'abonnés à une première vitesse de transmission relativement faible et dans la ligne respective de transmission dans des créneaux temporels de canaux temporels comportant des créneaux temporels apparaissant cycliquement de façon répétée dans des trames successives d'impulsions, qui permettent la transmission de signaux possédant une seconde vitesse de transmission supérieure à la première vitesse de transmission, et dans lequel les lignes d'abonnés (Ltg1 à Ltgn) sont reliées à la ligne respective de transmission (par exemple PCM3) par l'intermédiaire d'un concentrateur (K) qui, d'une part, retransmet les signaux qui sont envoyés par l'intermédiaire des différentes lignes d'abonnés (Ltg1 à Ltgn), dans les canaux temporels disponibles pour leur retransmission, par l'intermédiaire de la ligne respective de transmission, et qui, d'autre part, retransmet les signaux qui lui sont envoyés, dans des canaux temporels disponibles pour la retransmission, dans la ligne respective de transmission (par exemple PCM3), à la ligne d'abonné (par exemple Ltg1), qui est respectivement mise en oeuvre, caractérisé par le fait que dans la ligne respective de transmission (par exemple PCM3) pour la transmission de signaux de commande et de signaux de données, seul est disponible respectivement, dans chaque sens de transmission, un canal temporel parmi les canaux temporels présents pour la transmission de signaux.

2. Montage suivant la revendication 1, caractérisé par le fait que le concentrateur (K) comporte au moins un module de ligne (LM1), auquel les lignes d'abonnés (Ltg1 à Ltg8) sont raccordées et qui est relié, d'une manière active, successivement aux lignes d'abonnés pour une réception ou une délivrance de signaux, et un dispositif central de commande (par exemple ZSM1), qui est relié aussi bien au module de ligne respect if (LM1) qu'à la ligne respective de transmission (par exemple PCM3), et que le dispositif central de commande (ZSM1) envoie les signaux qui sont délivrés par l'intermédiaire des différentes lignes d'abonnés et qui sont envoyés à ce dispositif par l'intermédiaire du module de ligne, dans les canaux temporels disponibles pour la retransmission, à la ligne de transmission (par exemple PCM3), respectivement mise en oeuvre, et envoie dessignaux, qui sont envoyés dans des canaux temporels correspondants par l'intermédiaire de la ligne respective de transmission, au module de ligne en vue de leur retransmission aux lignes d'abonnés qui sont respectivement mises en oeuvre.

3. Montage suivant la revendication 2, caractérisé par le fait que les transmissions de signaux dans les lignes d'abonnés (Ltg1 à Ltgn), dans la ligne respective de transmission (par exemple PCM3) ainsi qu'entre le module de ligne (LM1) et le dispositif central de commande (ZSM1) sont réalisées respectivement sous la forme de transmission de signaux protégées

4. Montage suivant la revendication 3, caractérisé par le fait que chaque module de ligne (LM1) comporte une multiplicité de circuits de raccordement de lignes (LA1 à LA8), auquel les lignes d'abonnés (Ltg1 à Ltg8) sont raccordées et qui servent de circuits d'interface, et qu'un circuit d'évaluation commun (LP) est relié, pour ledit contrôle des signaux de protection, aux circuits de raccordement de lignes, qui font partie d'un module de li gne respectif.

5. Montage suivant l'une des revendications 2 à 5, caractérisé par le fait que le dispositif central de commande (ZSM1) comporte au moins un premier élément de circuit (SSP) relié au module respectif de ligne (LM1), et au moins un second élément de circuit (SP) relié à ce premier élément de circuit et à la ligne respective de transmission (par exemple PCM3), et que le premier élément de circuit respectif (SSP), d'une part, reçoit des signaux de commande et des signaux de données de la part du module de ligne respectif (LM1) et envoie les signaux de données directement et les signaux de commande par l'intermédiaire du second élément de circuit (SP) à la ligne de transmission (par exemple PCM3), et, d'autre part, reçoit des signaux de données directement et des signaux de commande par l'intermédiaire du second élément de circuit (SP) en provenance de la ligne de transmission (PCM3) et envoie des signaux de données et des signaux de commande au module de ligne respectif (LM1).

6. Montage suivant l'une des revendications 2 à 5, caractérisé par le fait que le dispositif central de commande (ZSM1) comporte au moins un premier élément de circuit et au moins un second élément de circuit, qui sont reliés au module de ligne respectif (LM1) et à la ligne respective de transmission (par exemple PCM3), que le premier élément de circuit respectif (SSP), d'une part, reçoit des signaux de données de la part du module de ligne respectif (LM1) et les envoie à la ligne de transmission (PCM3), et, d'autre part, reçoit des signaux de données en provenance de la ligne de transmission et envoie ces signaux au module de ligne respectif, lors de l'apparition d'un signal de libération délivré par le second élément de circuit (SP), et que le second élément de circuit respectif (SP), d'une part, reçoit des signaux de commande de la part du module de ligne respectif (LM1) et les envoie à la ligne de transmission (PCM3), et, d'autre part, reçoit des signaux de commande en provenance de la ligne de transmission et envoie ces signaux au module de ligne respectif.